**Europäisches Patentamt**

**European Patent Office**

**Office européen des brevets**

(19)

(11) Veröffentlichungsnummer: **0 010 781**
**B1**

(12) # EUROPÄISCHE PATENTSCHRIFT

(45) Veröffentlichungstag der Patentschrift:
**10.03.82**

(51) Int. Cl.³: **F 16 H 31/00,** F 01 D 25/34

(21) Anmeldenummer: **79200451.7**

(22) Anmeldetag: **15.08.79**

(54) Verzahnung an einem Klinkenrad und einer Klinke einer Wellendrehvorrichtung.

(30) Priorität: **14.09.78 CH 9625/78**

(43) Veröffentlichungstag der Anmeldung:
**14.05.80 Patentblatt 80/10**

(45) Bekanntmachung des Hinweises auf die Patenterteilung:
**10.03.82 Patentblatt 82/10**

(84) Benannte Vertragsstaaten:
**FR GB SE**

(56) Entgegenhaltungen:
**FR-A-2 230 239**
**FR-A-2 329 846**
**US-A-4 090 409**

(73) Patentinhaber: **BBC Aktiengesellschaft Brown, Boveri & Cie., CH-5401 Baden (CH)**

(72) Erfinder: **Schwarz, Hans, Rinikerstrasse 62, CH-5222 Umiken (CH)**

## Verzahnung an einem Klinkenrad und einer Klinke einer Wellendrehvorrichtung

Die vorliegende Erfindung betrifft eine Verzahnung an einem Klinkenrad und einer Klinke einer Wellendrehvorrichtung, insbesondere für Turbinenläufer.

Nach dem Abstellen einer Turbine muß bis zum vollständigen Abkühlen der Läufer langsam weiterbewegt werden, um eine Verkrümmung der Welle zu verhindern. Ebenso muß zum Anfahren der Turbine der Läufer in langsame Drehung versetzt werden, um das Losbrechmoment zu überwinden.

Dafür werden Wellendrehvorrichtungen verwendet, bei welchen beispielsweise ein Bolzen, welcher an einem vertikal verschiebbaren und von einem Antrieb bewegbaren Gestänge angeordnet ist, in den Zahnkranz eines mit der Turbinenwelle drehfest verbundenen Zahnrades eingreift, wobei die Turbinenwelle weitergedreht wird. Bei diesen bekannten Anordnungen kann das Gestänge entweder in vertikaler Richtung gestoßen oder gezogen werden (CH-A-592 826).

Von Nachteil bei den bekannten Anordnungen ist es, daß die Verzahnungen der an der Turbinenwelle vorgesehenen Zahn- oder Klinkenräder sowie die in diese Verzahnungen eingreifenden Partien der Klinken eckig, und in den meisten Fällen die Zähne der Zahnkränze in den Eingriffspartien konkav ausgebildet sind. Bei den letzteren sind die eingreifenden Klinken konvex ausgebildet, oder weisen einen kreisrunden Querschnitt auf. Dadurch kann es sich beispielsweise bei falsch eingestelltem Klinkenhub oder beim Nachlauf des Zahnrades nach dem Klinkenhub oder durch Weiterdrehen der Turbinenwelle ergeben, daß die Eingriffspartien des Klinkenrades und der Klinke nicht mehr ineinanderpassen, oder die Klinke kann beim nächsten Hub auf eine Zahnspitze treffen. Dies führt bei den für die Drehung der Turbinenwelle erforderlichen hohen Drücken zu Schäden an den Eingriffspartien bzw. können Zahnbrüche auftreten. Bei einem rückwärtsdrehenden Klinkenrad, wie dies beispielsweise beim Abstellen von Kompressorantrieben vorkommen kann, wobei das Drehmoment des rückwärtsdrehenden Klinkenrades die Hubkraft der Klinke überwindet, kann eine Zerstörung der Drehvorrichtung erfolgen.

Es ist die Aufgabe der vorliegenden Erfindung, eine Verzahnung für ein Klinkenrad sowie ein Eingriffsprofil für eine Klinke zu schaffen, bei welchen in jeder Stellung des Klinkenrades zur Klinke ein gefahrloser Eingriff erfolgen kann und selbst bei rückwärtsdrehendem Klinkenrad weder eine Beschädigung der Klinke noch der Verzahnung am Klinkenrad auftritt.

Die vorgenannte Aufgabe wird erfindungsgemäß dadurch gelöst, daß das Klinkenrad Zähne mit konvexen Abwälzkrümmungen aufweist und die Klinke an der Eingriffsfläche mit einer zu den Abwälzkrümmungen der Zähne ähnlich konvex ausgebildeten Abwälzfläche versehen ist.

Der Vorteil der erfindungsgemäßen Ausbildung ist insbesondere darin zu sehen, daß durch die konvexen Abwälzkrümmungen der Zähne des Klinkenrades, welche bis zu den Zahnspitzen reichen und durch die den Klinkenradzähnen ähnlich konvex ausgebildete Eingriffsfläche der Klinke, ein Eingreifen der Klinke in das Klinkenrad in jeder Lage des letzteren gewährleistet und eine Beschädigung der Zahnspitzen oder ganzer Zähne des Klinkenrades sowie der Klinkeneingriffsfläche ausgeschlossen ist.

Gemäß einer weiteren Ausbildungsform der erfindungsgemäßen Verzahnung sind die Abwälzkrümmungen der Zähne vom Zahngrund bis zur Zahnspitze als tragende Flächen ausgebildet und der Zahngrund ist zwischen der Abwälzkrümmung und einem Übergang zu einer ebenen Fläche annähernd V-förmig ausgerundet.

Durch die vorgenannte Ausbildung der Zähne kann auf der ganzen tragenden Länge der Maximaldruck der Klinke einwirken, ohne daß eine Beschädigung eintritt. Weiterhin wird durch die Form der Eingriffspartien bei ungünstiger Klinkenradstellung ein schadloses Abgleiten der Klinken in die nächste Zahnausnehmung ermöglicht.

Ferner ist es vorteilhaft, wenn die Eingriffsfläche der Klinke aus einer ebenen Oberkante in eine mit einem Radius $R_2$ gekrümmte Eingriffsfläche übergeht, welche in einer keilförmig ausgebildeten Nase endet.

Diese Ausbildungsform der Klinkennase verhindert, daß die Klinke im Zahngrund klemmt oder reibt, wodurch Beschädigungen durch Überhitzung auftreten könnten.

In der Zeichnung ist ein Ausführungsbeispiel einer erfindungsgemäßen Verzahnung vereinfacht dargestellt. Es zeigt

Fig. 1 eine Übersichtsanordnung einer Klinke mit einem Klinkenrad,

Fig. 2 einen Eingriffsablauf der Klinke für einen Klinkenradzahn,

Fig. 3 und 4 Einzelheiten des Bewegungsablaufes bei normalem Zahneingriff,

Fig. 5 und 6 Einzelheiten des Bewegungsablaufes bei mangelhaftem Zahneingriff.

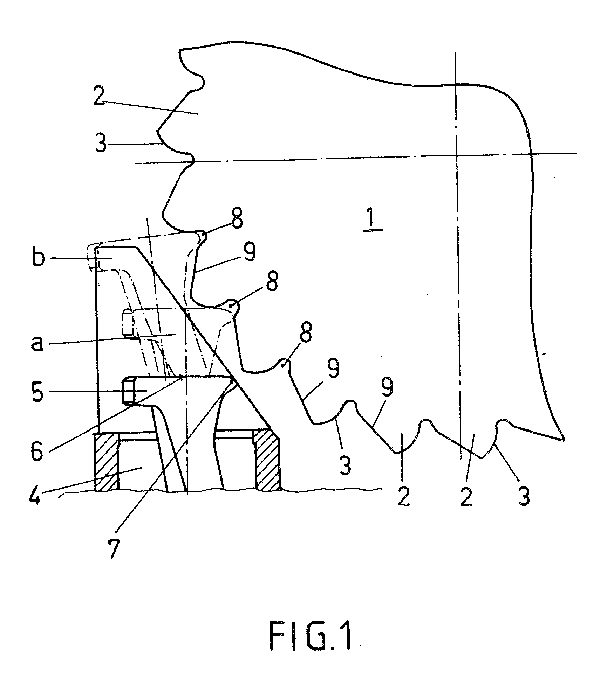

Gemäß Fig. 1 ist mit 1 ein Klinkenrad bezeichnet, dessen Zähne 2 konvexe, als Eingriffspartien ausgebildete Abwälzkrümmungen 3 aufweisen. In einer an sich bekannten und nur andeutungsweise (teilweise gebrochen) dargestellten Wellendrehvorrichtung 4 ist eine Klinke 5 in vertikaler Richtung beweglich und um einen (nicht dargestellten) Drehpunkt schwenkbar gelagert. In der strichpunktierten Darstellung der Klinke 5 sind zwei Stellungen derselben gezeigt, nämlich die Eingriffsstellung a bei Drehbeginn und die Endstellung b nach vorliegender Drehung um eine Zahnteilung. Die Klinke 5 weist eine vorzugsweise ebene Oberkante 6 auf, die zum Klinkenrad 1 hin in eine mit einem

Radius $R_2$ gekrümmte Eingriffsfläche übergeht. Diese gekrümmte Eingriffsfläche endet in einer Nase 7. Die Eingriffsfläche greift in die Zähne 2 ein und die Nase 7 ist vorzugsweise keilförmig mit abgerundeter Spitze ausgebildet und paßt in die entsprechende V-förmige Vertiefung im Zahngrund 8 zwischen den Zähnen 2 des Klinkenrades 1 ein. Die konvexen Abwälzkrümmungen 3 der Zähne 2 sind vom Zahngrund 8 bis zur Zahnspitze als tragende Flächen ausgebildet.

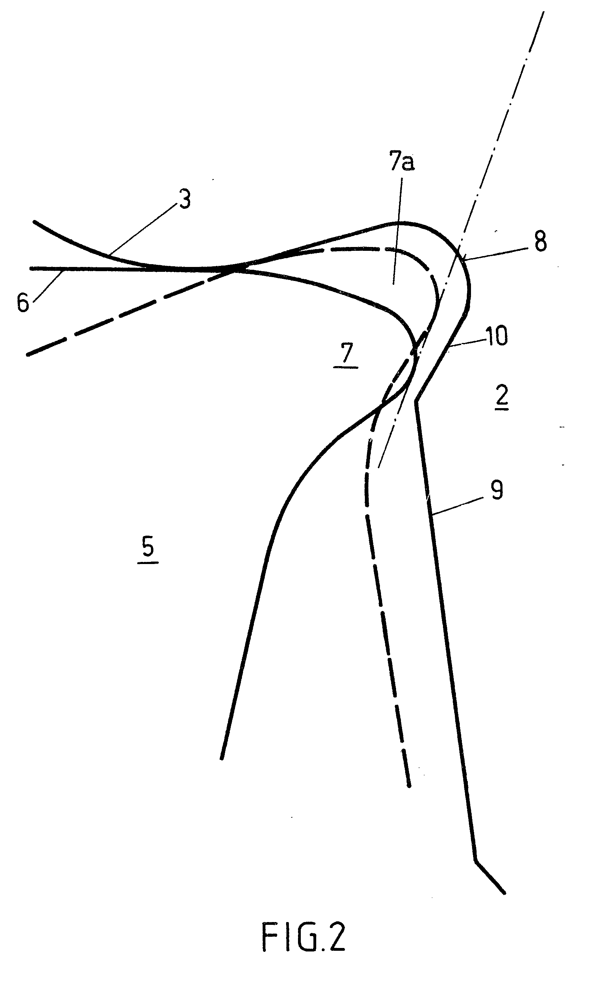

Bei dem in der Fig. 2 gezeigten Bewegungsablauf der Klinke 5 mit der keilförmigen Klinkennase 7 beim Eingriff in die Zähne 2 des Klinkenrades 1 bewegt sich die Nase 7 in die strichliert gezeichnete Endlage 7a und somit vom Übergang 10 des Zahngrundes 8 weg, wobei der Bewegungsablauf der Nase 7 entlang einer strichpunktierten Verlängerungslinie klarer herausgestellt ist. Daraus ist ersichtlich, daß ein Reiben oder Beschädigen der Nase 7 verhindert wird, da diese in keiner Position vollständig auf dem Übergang 10 oder am Zahngrund 8 aufliegt.

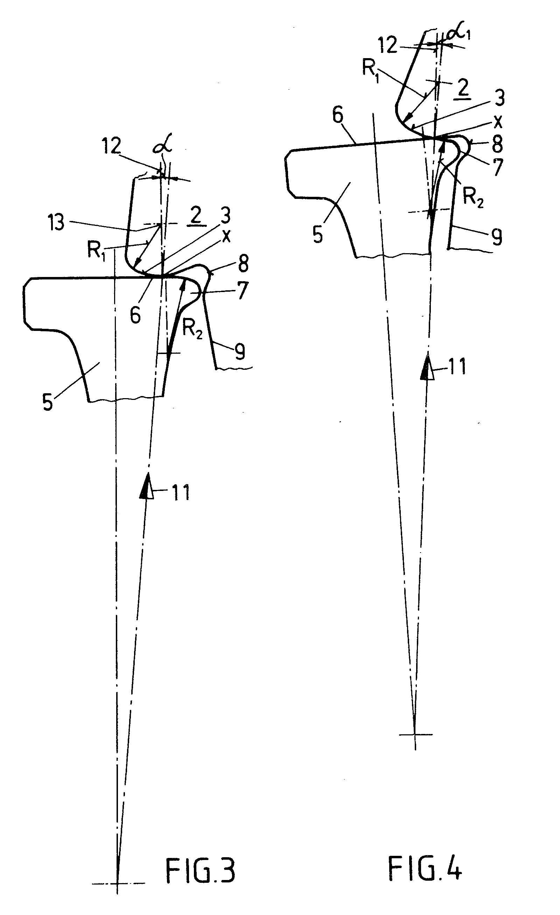

In den Fig. 3 und 4 wird der Bewegungsablauf im einzelnen dargestellt, und zwar einmal bei Drehbeginn (Fig. 3) und zum anderen bei Erreichen der Endstellung der Klinke 5 bei Beendigung des Drehvorganges. Die ebene Oberkante 6 der Klinke 5 trifft auf die konvexe Abwälzkrümmung 3 des Zahnes 2 auf, wodurch zur Überwindung des Anfahrmomentes eine gute Tragfähigkeit erzielt wird. Die Stoßrichtung der Klinke 5, welche durch einen Pfeil 11 dargestellt ist, verläuft in einem Winkel $\alpha$, beispielsweise 4°, zur gedachten Senkrechten 12 auf die ebene Oberkante 6 der Klinke 5 am Zentrum 13 des Radius $R_1$ der Abwälzkrümmung 3 des Zahnes 2 vorbei. Durch die ebene Oberkante 6, welche auf die konvexe Abwälzkrümmung 3 des Zahnes 2 am Berührungspunkt $\chi$ auftrifft, zeigt die Klinke 5 die Tendenz, gegen den Zahngrund 8 zu gleiten, jedoch kann bei diesem Auftreffwinkel die Reibung nicht überwunden werden. Dies wäre erst bei einem vielfach größeren Auftreffwinkel möglich. Gleichzeitig würde ein Gleiten durch das Anstoßen der Nase 7 am Zahngrund 8 verhindert.

Bei der in Fig. 4 gezeigten Endstellung der Klinke 5 während des Drehvorganges steht die gekrümmte Eingriffsfläche ($R_2$) der Klinke 5 mit der Abwälzfläche 3 in Berührung. Durch den Abwälzvorgang der Klinke 5 an der Abwälzkrümmung 3 hat sich der Berührungspunkt $\chi$ an der Abwälzkrümmung 3 des Zahnes 2 in Richtung zum Zahngrund 8 verschoben, wodurch die durch den Pfeil 11 angedeutete Stoßrichtung nur in einem kleinen Winkel $\alpha_1$, beispielsweise 1,5° vom Klinkenrad 1 weg geneigt zur gedachten Senkrechten 14 des Radius $R_1$ der Abwälzkrümmung 3 des Zahnes 2 und des Radius $R_2$ der Klinke 5 am Zentrum 13 vorbei verläuft. Dadurch wird ein Abgleiten der Nase von der Abwälzkrümmung 3 vermieden, da zum Abgleiten ein wesentlich niederer Reibungskoeffizient (ca.

$\mu = 0,026$) erforderlich wäre. Wenn das Klinkenrad 1 einen größeren Durchmesser aufweisen würde, so verbliebe die Stoßrichtung 11 gegenüber dem Zentrum 13 der Abwälzkrümmungen 3 auch in der Endstellung noch leicht zum Klinkenrad 1 hin geneigt, und könnte die Abwälzkrümmung 3 sich noch auf der ebenen Oberkante 6 befinden.

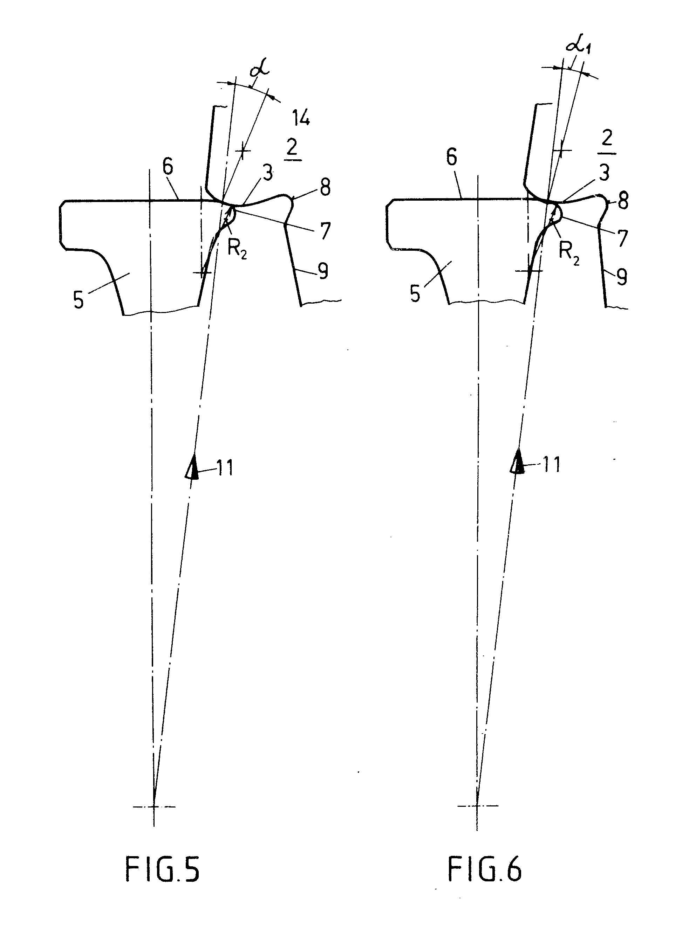

Bei einem ungenügenden Zahneingriff gemäß Fig. 5, d. h. wenn die Stoßrichtung 11 in einem größeren Winkel $\alpha$, beispielsweise 16° zur gedachten Senkrechten 14 der Abwälzkrümmung 3 geneigt ist, gleitet die Klinke 5 vom äußersten Punkt der Abwälzkrümmung 3 in den nächsten Zahn 2 ab, wodurch ein Eingreifen der Klinke 5 in diesen erfolgt. Selbst bei einem derartigen Grenzfall befindet sich die Auflagefläche auf der Eingriffsfläche ($R_2$) der Klinke 5 und auf dem äußersten Ende der Abwälzkrümmung 3, wodurch ein schädlicher Zahneingriff vermieden wird.

Die Fig. 6 stellt einen Zahneingriff dar, bei welchem die Klinke 5 erst nach einer bestimmten Teildrehung des Klinkenrades 1 abrutscht. Wenn der obere Zahn bereits über die Endstellung hinweggedreht ist, wird beim nächsten Hub der Klinke 5 entweder dieser Zahn oder der nächstfolgende erfaßt.

Bei Beginn eines Rückwärtsdrehens des Klinkenrades 1 mit eingerasteter Klinke 5, wie es beispielsweise bei Turbinenantrieben für Kompressoren beim Abstellen der Anlage eintreten kann, kann die Klinke 5 vom Klinkenrad 1 nach unten aus dem Zahnbereich gedrückt werden und die Zähne 2 können über die Klinke hinweggleiten, ohne daß eine Beschädigung eintritt.

## Patentansprüche

1. Verzahnung an einem Klinkenrad (1) und einer Klinke (5) einer Wellendrehvorrichtung, insbesondere für Turbinenläufer, dadurch gekennzeichnet, daß das Klinkenrad (1) Zähne (2) mit konvexen Abwälzkrümmungen (3) aufweist und die Klinke (5) an der Eingriffsfläche mit einer zu den Abwälzkrümmungen (3) der Zähne (2) ähnlich konvex ausgebildeten Abwälzfläche versehen ist.

2. Verzahnung nach Anspruch 1, dadurch gekennzeichnet, daß die Abwälzkrümmungen (3) der Zähne (2) vom Zahngrund (8) zur Zahnspitze als tragende Flächen ausgebildet sind und der Zahngrund (8) zwischen der Abwälzkrümmung (3) und einem Übergang (10) zu einer ebenen Fläche (9) annähernd V-förmig ausgerundet ist.

3. Verzahnung nach Anspruch 1, dadurch gekennzeichnet, daß die Eingriffsfläche der Klinke (5) aus einer ebenen Oberkante (6) in eine mit einem Radius $R_2$ gekrümmte Eingriffsfläche übergeht, welche in einer keilförmig ausgebildeten Nase (7) endet.

## Claims

1. Toothing on a ratchet wheel (1) and a pawl (5) of a shaft-turning device, in particular for turbine rotors, characterised in that the ratchet wheel (1) possesses teeth (2) having convex roll-off curvatures (3), and the pawl (5) is provided, on the engagement surface, with a roll-off surface having a convex form which is similar to the roll-off curvatures (3) of the teeth (2).

2. Toothing according to Claim 1, characterised in that the roll-off curvatures (3) of the teeth (2) are designed as load-bearing surfaces, from the root (8) of the tooth to the tip of the tooth, and the root (8) of the tooth is rounded out into approximately a V-shape, between the roll-off curvature (3) and a transition (10) to a plane surface (9).

3. Toothing according to Claim 1, characterised in that the engagement surface of the pawl (5) exhibits a transition from a plane upper edge (6) to a curved engagement surface having a radius $R_2$, the latter surface terminating in a nose (7) of wedge-shaped design.

## Revendications

1. Denture sur une roue à cliquet (1) et un cliquet (5) d'un dispositif de rotation d'arbre, en particulier pour rotor de turbine, caractérisée en ce que la roue à cliquet (1) présente des dents (2) à courbure développante (3) convexe et le cliquet (5) est pourvu, au niveau de sa surface d'engrènement, d'une surface développante de forme convexe semblable aux courbures développantes (3) des dents (2).

2. Denture suivant la revendication 1, caractérisée en ce que les courbures développantes (3) des dents (2) ont la forme de surfaces portantes allant du fond (8) des dents jusqu'à leur pointe et le fond (8) entre la courbure développante (3) et une transition (10) vers une surface plane (9) est arrondie approximativement en forme de V.

3. Denture suivant la revendication 1, caractérisée en ce que la surface d'engrènement du cliquet (5) passe d'un bord supérieur plan (6) à une surface d'engrènement courbe de rayon $R_2$ qui se termine dans un bec (7) cunéiforme.

FIG.1

FIG.2

FIG.3

FIG.4

FIG.5 FIG.6